# EUROPÄISCHE PATENTSCHRIFT

(11) **EP 2 823 704 B1**
(45) Veröffentlichungstag und Bekanntmachung des Hinweises auf die Patenterteilung: **20.06.2018**
(21) Anmeldenummer: 14175876.3
(22) Anmeldetag: 04.07.2014
(51) Int. Cl.: A01G 3/04

(54) **Vorrichtung und Verfahren zum Entfernen von Pflanzenteilen**
Device and method for removing plant pieces
Dispositif et procédé destinés à enlever des parties de plantes

(30) Priorität: 11.07.2013 DE 102013213623
(43) Veröffentlichungstag der Anmeldung: 14.01.2015
(73) Patentinhaber: ERO-GERÄTEBAU GmbH, 55469 Niederkumbd (DE)
(72) Erfinder: Erbach, Michael, 55469 Niederkumbd (DE)
(74) Vertreter: Lemcke, Brommer & Partner Patentanwälte Partnerschaft mbB

(56) Entgegenhaltungen:
- EP-A1- 2 486 788
- EP-A2- 0 892 595
- WO-A2-2012/023115
- FR-A1- 2 871 990

## Beschreibung

Die Erfindung betrifft eine Vorrichtung und ein Verfahren zum Entfernen von Pflanzenteilen von mindestens einer länglichen, zugstabilen, biegeschlaffen Wuchshilfe während eine Bewegung der Vorrichtung entlang der Wuchshilfe, wobei die Wuchshilfe die Vorrichtung durchläuft gemäß den Oberbegriffen der Ansprüche 1 und 11.

Bei dem Anbau von Pflanzen sind längliche, zugstabile, biegeschlaffe Wuchshilfen wie beispielsweise Seile oder Drähte bekannt, um die Pflanzen zu stützen und/oder den Wuchs der Pflanzen zu beeinflussen. So ist beispielsweise im Weinbau die Verwendung von Spalierdrähten bekannt, beispielsweise bei der Guyot- und auch bei der Kordonerziehung.

Bei dem Anbau von Pflanzen mittels vorgenannter Wuchshilfen ist es typischerweise zu bestimmten Zeitpunkten wünschenswert, Pflanzenteile abzutrennen und die an den Wuchshilfen noch anhaftenden, abgetrennten Pflanzenteile zu entfernen. So ist es beispielsweise im Weinbau üblich, Rebentriebe abzutrennen, beispielsweise mittels eines motorisch angetriebenen Vorschneiders. Eine Vielzahl von abgetrennten Rebentrieben bleibt jedoch nach dem Abtrennen von der Rebenpflanze an der Wuchshilfe haften, aufgrund von Verrankung oder zumindest teilweisem Umschließen der Wuchshilfe durch den Rebentrieb oder einzelne Fortsätze des Rebentriebs.

Das Entfernen der an der Wuchshilfe anhaftenden Pflanzenteile erfolgt üblicherweise manuell und stellt einen aufwändigen, mühsamen Arbeitsvorgang dar. Aus WO 2009/051498 A2 ist eine Vorrichtung und ein Verfahren zum Entfernen von Pflanzenteilen von einer Wuchshilfe bekannt, wobei die an der Wuchshilfe anhaftenden Pflanzenteile mittels einer Pflanzenzuführungseinheit komprimiert und/oder zu einer Ablöseeinheit zugeführt werden. Die Ablöseeinheit umfasst mindestens ein Ablöseelement wie beispielsweise ein rotierendes Schneidmesser, mittels dessen die Pflanzenteile zumindest teilweise von der Wuchshilfe abgelöst werden. Weiterhin wird die Wuchshilfe während des Bearbeitungsvorgangs mittels einer Wuchshilfeführung geführt, um insbesondere eine Beschädigung der Wuchshilfeführung durch das Ablöseelement zu vermeiden. Grundsätzlich ist es möglich, mittels dieser Vorrichtung im Weinbau nach dem händischen Schneiden der Reben die abgeschnittenen, noch an den Wuchshilfen anhaftenden Rebentriebe zu entfernen und auf die Verwendung eines motorisch angetriebenen Vorschneiders zu verzichten. Diese Vorrichtung weist gegenüber vorbekannten Vorschneidern den Vorteil auf, dass die Anwendung nicht auf Weinberge mit Kordonerziehung beschränkt ist.

Grundsätzlich problematisch bei dem Entfernen von Pflanzenteilen von der Wuchshilfe ist, dass die Pflanzenteile unregelmäßig gewachsen und insbesondere nach einem Abschneiden von der Hauptpflanze in unterschiedlichsten Richtungen und in unterschiedlichen Längen von der Wuchshilfe abstehen können, so dass hohe Anforderungen an das Verfahren und die Vorrichtung zum Entfernen aller Ausgestaltungen der Pflanzenteile bestehen. Darüber hinaus können die Pflanzenteile durch Umwicklungen und/oder Verästelungen eine stabile Verbindung mit der Wuchshilfe aufweisen, die schwierig zu lösen ist.

Aus EP 2 486 786 A1 und EP 2 486 787 B1 ist eine Vorrichtung bekannt, welche mittels einer eingangsseitig angeordneten Schnecke ein Drehen etwaiger abstehender Pflanzenteile wie beispielsweise Ruten einer Rebe in eine bevorzugte Einzugsrichtung einer Pflanzenführungseinheit bewirkt.

Weiterhin ist in der EP 0 892 595 A2 eine Maschine zum Ablösen und Beseitigen von abgeschnittenen Hölzern, insbesondere von auf einem Stützdraht aufgebundenen Reben beschrieben. Die Maschine umfasst dabei mindestens eine Hebe-/Trennvorrichtung mit einer seitlich an der Maschine angebrachten Führung zum Aufrichten des Stützdrahts, eine Anhebvorrichtung mit einer Anheberolle, eine Beschickungs- und eine Ausziehvorrichtung sowie eine Hackmaschine. In der EP 0 892 595 A2 wird weiterhin das dazugehörige Verfahren zum Lösen von Pflanzenresten der Rebstöcke von dem Aufbinddraht beschrieben. Dazu wird der Stützdraht, auf welchem die Pflanzenreste befestigt sind, seitlich aus seiner Reihe gezogen und zwischen den Hebe- und Trennorganen hin durchgezogen. Dadurch lösen sich die Pflanzenreste von dem Stützdraht. Daran anschließend werden die Pflanzenreste zu einer Beschickungs- und einer Zerkleinerungs- oder Hackmaschine transportiert, um die Pflanzenreste erfindungsgemäß zu zerkleinern.

Der vorliegenden Erfindung liegt die Aufgabe zugrunde, die Fehleranfälligkeit der vorbekannten Vorrichtung weiter zu reduzieren und somit aus Fehlfunktionen bei der Benutzung resultierende notwendige Unterbrechungen des Arbeitsablaufs zu verringern.

Gelöst ist diese Aufgabe durch eine Vorrichtung gemäß Anspruch 1 sowie ein Verfahren gemäß Anspruch 11. Vorteilhafte Ausgestaltungen der Vorrichtung finden sich in den Ansprüchen 2 bis 10, vorteilhafte Ausgestaltungen des Verfahrens in den Ansprüchen 12 bis 15. Hiermit wird der Wortlaut sämtlicher Ansprüche durch ausdrückliche Bezugnahme in die Beschreibung aufgenommen. Die erfindungsgemäße Vorrichtung zum Entfernen von Pflanzenteilen von mindestens einer länglichen, zugstabilen, biegeschlaffen Wuchshilfe während einer Bewegung der Vorrichtung entlang der Wuchshilfe umfasst eine Wuchshilfeführung, zum Führen der Wuchshilfe während der Bewegung der Vorrichtung entlang der Wuchshilfe. Weiterhin umfasst die Vorrichtung eine Ablöseeinheit. Die Vorrichtung umfasst weiterhin eine Pflanzenführungseinheit zum Komprimieren und/oder Zuführen der an der Wuchshilfe anhaftenden Pflanzenteile zu der Ablöseeinheit.

Die Ablöseeinheit umfasst mindestens ein Ablöseelement, welches Ablöseelement derart beweglich an der Vorrichtung angeordnet ist, dass bei Betrieb durch Bewegung des Ablöseelementes Pflanzenteile von der Wuchshilfe zumindest teilweise ablösbar sind.

In Durchlaufrichtung der Wuchshilfe ist die Pflanzenführungseinheit vor der Ablöseeinheit und vor der Wuchshilfeführung angeordnet. Bei Verwendung der erfindungsgemäßen Vorrichtung wird die Wuchshilfe in die Vorrichtung eingelegt und die Vorrichtung entlang der Wuchshilfe bewegt, so dass die Wuchshilfe durch die Vorrichtung hindurch verläuft. Bei Durchlaufen der Wuchshilfeführung treffen etwaige an der Wuchshilfeführung anhängende Pflanzenteile somit vor der Ablöseeinheit und vor der Wuchshilfeführung auf die Pflanzenführungseinheit.

Wesentlich ist, dass die Vorrichtung zumindest zwei motorisch angetriebene Einführhilfen aufweist, die in Durchlaufrichtung der Wuchshilfe vor der Pflanzenführungseinheit angeordnet sind. Die Einführhilfen sind derart angeordnet und mit der Pflanzenführungseinheit zusammenwirkend ausgebildet, dass bei Benutzung der Vorrichtung die Wuchshilfe zwischen den beiden Einführhilfen und durch die Pflanzenführungseinheit, die Ablöseeinheit und die Wuchshilfeführung hindurchläuft, so dass die Einführhilfen den Einführbereich von Wuchshilfe und Pflanzen in die Pflanzenführungseinheit zumindest horizontal nach rechts und links begrenzen, und so dass die Pflanzenführungseinheit den Einführbereich von Wuchshilfe und Pflanzen in die Ablöseeinheit zumindest vertikal nach oben und unten begrenzt, so dass in der Zusammenwirkung von Einführhilfen, Pflanzenführungseinheit und

Wuchshilfeführung für in etwa geradlinige Verläufe der Wuchshilfe ein Begrenzungsraum für die Wuchshilfe und die Pflanzen ausgebildet ist.

Das erfindungsgemäße Verfahren zum Entfernen von Pflanzenteilen von mindestens einer länglichen, zugstabilen, biegeschlaffen Wuchshilfe während einer Bewegung mittels einer Vorrichtung während einer Bewegung der Vorrichtung entlang der Wuchshilfe umfasst folgende Verfahrensschritte:
- Komprimieren und/oder Zuführen von an der Wuchshilfe anhaftenden Pflanzenteilen mittels einer Pflanzenführungseinheit zu einer Ablöseeinheit,
- durch Bewegen eines Ablöseelementes der Ablöseeinheit zumindest teilweises Ablösen der Pflanzenteile von der Wuchshilfe und
- Führen der Wuchshilfe während der Bewegung Vorrichtung entlang der Wuchshilfe mittels einer Wuchshilfeführung.

Wesentlich ist, dass vor dem Komprimieren und/oder Zuführen der Pflanzenteile mittels der Pflanzenführungseinheit mittels zweier motorisch angetriebener Einführhilfen, zwischen denen die Wuchshilfe hindurchläuft, der Einführbereich von Wuchshilfe und Pflanzen in die Pflanzenführungseinheit zumindest horizontal nach rechts und links begrenzt wird.

Die Erfindung ist in der Erkenntnis begründet, dass bei den vorbekannten Vorrichtungen die notwendigen Unterbrechungen aufgrund einer Beschädigung der Wuchshilfe oder ein Unterbrechen oder verlangsamen der Bearbeitung aufgrund eines Ansammelns größerer Mengen von Pflanzenresten vor der Pflanzenführungseinheit eine erhebliche Beeinträchtigung bei der Verwendung der vorbekannten Vorrichtung darstellt. Diese Erkenntnis konnte erst durch aufwändige Versuchsreihen und praktische Anwendung der vorbekannten Vorrichtungen erzielt werden.

Durch das Anordnen der mindestens zwei motorisch angetriebenen Einführhilfen vor der Pflanzenführungseinheit können überraschenderweise zwei Fehlerquellen zumindest weitgehend eliminiert werden:
Zum einen ermöglicht die Kombination der zwei motorisch angetriebenen Einführhilfen zusammen mit der Pflanzenführungseinheit eine kontinuierliche und zuverlässige Zuführung der Pflanzenteile zu der Ablöseeinheit. Zum anderen wird durch die zwei motorisch angetriebenen Einführhilfen der Einführraum der Wuchshilfe in die Vorrichtung zumindest horizontal nach rechts und links begrenzt, so dass ein seitliches Verrutschen der Wuchshilfe insbesondere aufgrund von an der Wuchshilfe anhängenden Pflanzenteilen auf einen vorgegebenen Raum in horizontaler Richtung begrenzt wird, so dass insbesondere eine Kollision der Wuchshilfe mit dem Ablöseelement der Ablöseeinheit vermieden oder zumindest das Risiko einer solchen Kollision erheblich verringert werden kann.

Entgegen vorheriger Annahmen ist es häufig nicht ausreichend, die Orientierung der Pflanzenteile mittels einer entsprechenden Vorrichtung in eine vorteilhafte Einzugsorientierung der Pflanzenführungseinheit zu überführen, wie beispielsweise in EP 2 486 786 A1 ausgeführt. Überraschenderweise ist es vorteilhaft, beidseitig jeweils eine motorisch angetriebene Einführhilfe vorzusehen, wobei die Wuchshilfe zwischen den Einführhilfen verläuft, da hierdurch einerseits das Einführen der Pflanzenteile in die Pflanzenführungseinheit begünstigt und andererseits ein seitliches Verrutschen der Wuchshilfe vermieden wird.

Durch die vorliegende Erfindung wird somit das Verhältnis zwischen Betriebs- und Wartungsdauer bei Benutzen solch einer Vorrichtung weiter verbessert und damit die Wirtschaftlichkeit zusätzlich erhöht.

Die zuvor genannten Vorteile treffen ebenso auf das erfindungsgemäße Verfahren gemäß Anspruch 11 zu. Das erfindungsgemäße Verfahren ist vorzugsweise zur Ausführung mittels einer erfindungsgemäßen Vorrichtung, insbesondere einer vorteilhaften Ausführungsform hiervon ausgebildet. Die erfindungsgemäße Vorrichtung ist vorzugsweise zur Durchführung des erfindungsgemäßen Verfahrens, insbesondere eine vorteilhaften Ausführungsform hiervon ausgebildet. Erfindungsgemäß sind Einführhilfen und die Wuchshilfeführung derart angeordnet und zusammenwirkend ausgebildet, dass durch die Einführhilfen und die Wuchshilfeführung ein Begrenzungsraum für in etwa geradlinige Verläufe der Wuchshilfe ausgebildet ist, welcher Begrenzungsraum nicht mit dem Wirkungsbereich des Ablöseelementes der Ablöseeinheit überlappt.

Zumindest bei einem in etwa geradlinigen Verlauf der Wuchshilfe wird deren Verlauf durch die erfindungsgemäße Vorrichtung somit durch Wuchshilfeführung und Einführhilfen derart begrenzt, dass ein Begrenzungsraum ausgebildet wird, der sich nicht mit dem Wirkungsbereich des Ablöseelementes der Ablöseeinheit überlappt, so dass eine Beschädigung der Wuchshilfeführung zumindest bei einem in etwa geradlinigen Verlauf durch das Ablöseelement vermieden wird. Vorzugsweise ist die Wuchshilfeführung im Bereich der Ablöseeinheit und/oder in Durchlaufrichtung der Wuchshilfe hinter der Ablöseeinheit angeordnet. Insbesondere ist es vorteilhaft, dass durch Zusammenwirkung von Wuchshilfeführung, Einführhilfen und vorteilhafterweise Pflanzenführungseinheit ein in etwa pyramidenförmiger oder pyramidenstumpfförmiger Begrenzungsraum für die Wuchshilfe ausgebildet wird.

Die Pyramidenhöhe oder Höhe des Pyramidenstumpfes erstreckt sich hierbei vorteilhafterweise in etwa parallel zu der Durchlaufrichtung der Wuchshilfe durch die Vorrichtung, vorzugsweise mit einer abnehmenden Querschnittsfläche der Pyramide bzw. des Pyramidenstumpfes in Richtung der Durchlaufrichtung, d. h. dass die Pyramide oder der Pyramidenstumpf sich in Durchlaufrichtung verjüngt. Vorzugweise weist die Pyramide eine viereckige Grundfläche auf, insbesondere bevorzugt ein Trapez, vorzugsweise ein gleichschenkliges Trapez. Vorzugsweise weist der Begrenzungsraum ausgehend von der Wuchshilfeführung einen horizontalen Öffnungswinkel im Bereich 5° bis 80°, insbesondere im Bereich 10° bis 60° auf. Hierdurch wird eine Optimierung hinsichtlich einer ausreichend großen Einführungsöffnung für Pflanzenteile in die Vorrichtung einerseits und einer Begrenzung möglicher geradliniger Verläufe der Wuchshilfe zur Vermeidung eines Kontakts mit dem Ablöseelement andererseits erzielt. Entsprechend wird bei dem erfindungsgemäßen Verfahren mittels der Einführhilfen und der Wuchshilfeführung, zusätzlich mittels der Pflanzenführungseinheit für in etwa geradlinige Verläufe der Wuchshilfe ein Begrenzungsraum ausgebildet, der nicht mit dem Wirkungsbereich des Ablöseelementes der Ablöseeinheit überlappt.

Vorzugsweise weist die Pflanzenführungseinheit zumindest eine motorisch angetriebene Zuführwalze auf und die Einführhilfen und die Wuchshilfeführung sind derart angeordnet und zusammenwirkend angeordnet, dass durch Einführhilfen und Wuchshilfeführung ein Begrenzungsraum über in etwa geradlinige Verläufe der Wuchshilfe ausgebildet ist, der nicht mit den seitlichen Rändern der Zuführwalze überlappt. Hierdurch wird somit vermieden, dass die Wuchshilfe zumindest bei in etwa geradlinigen Verläufen sich seitlich, d. h. in Durchlaufrichtung rechts oder links bis über einen rechten oder linken seitlichen Rand der Zuführwalze verschiebt. Denn ein Verschieben der Wuchshilfe bis über einen seitlichen Rand der Zuführwalze oder einer als Einzugsrad ausgebildeten Zuführwalze führt meist zu einer Beschädigung, insbesondere einem Durchtrennen der Wuchshilfe. Insbesondere kann meist die Wuchshilfe nur manuell aus dieser Position wieder in eine mittig über die Zuführwalze verlaufende Position gebracht werden. Ein Unterbrechen der Bearbeitung aufgrund eines solchen Fehlers wird somit in dieser vorzugsweisen Ausführungsform vermieden.

Insbesondere ist es vorteilhaft, dass die Einführhilfen derart ausgebildet und angeordnet sind, dass ein Einzugsbereich der Einführhilfe zumindest in Richtung der Drehachse der Zuführwalze seitlich begrenzt wird.

Untersuchungen haben ergeben, dass vorzugsweise die Einführhilfen schräg zueinander angeordnet sind, derart, dass der Abstand der Einführhilfen in einem oberen Bereich geringer ist als in einem unteren Bereich. Die Einführhilfen bilden somit einen trapezförmigen Einführbereich für die Vorrichtung aus, vorzugsweise einen Einführbereich in Form eines symmetrischen Trapezes.

Insbesondere ist es vorteilhaft, dass die Einführhilfen an einem oberen Rand nah aneinander angeordnet sind, sich insbesondere an einem oberen Rand der Einführhilfen einen geringeren Abstand aufweisen, als an einem unteren Rand, so dass der Einführbereich in etwa dreieckig, insbesondere in der Form eines gleichschenkligen Dreiecks ausgebildet ist, wobei jede der Einführhilfe einen Schenkel des Dreiecks bildet. Insbesondere bevorzugt schließen die beiden Einführhilfen in Draufsicht von vorne auf die Vorrichtung einen Winkel im Bereich 5° bis 45°, insbesondere im Bereich 10° bis 40° ein. Hierdurch ergibt sich der Vorteil, dass die größere Menge an Pflanzenteilen, welche sich typischerweise in einem unteren Bereich befindet, insbesondere bei mehreren übereinander angeordneten Wuchshilfen an einer unteren Wuchshilfe befindet, im unteren Bereich der Einführhilfe mehr Platz hat.

Ein weiterer Vorteil ist, dass die Einführhilfen oben einen geringeren Abstand aufweisen, besteht darin, dass ein "Hochwandern" der Wuchshilfe verhindert wird. Das "Hochwandern" der Wuchshilfe bringt eine hohe Gefahr mit sich, dass die Wuchshilfe beschädigt bzw. durchtrennt wird.

Die Einführhilfen werden vorzugsweise gegenläufig zueinander angetrieben, so dass die Einführhilfen sich an der der Wuchshilfe zugewandten Seite jeweils in Durchlaufrichtung der Wuchshilfe drehen, d. h. eine Förderwirkung für Pflanzenteile in Richtung der Pflanzenführungseinheit aufweisen. Hierdurch wird in effizienter Weise die Funktion der Pflanzenführungseinheit unterstützt, indem durch den vorgeschalteten Pflanzenführungsvorgang mittels der Einführhilfen bereits ein Einführen der Pflanzenteile in die Pflanzenführungseinheit begünstigt wird.

Vorzugsweise wird die Fördergeschwindigkeit der Einführhilfen abhängig von der Durchlaufgeschwindigkeit der Wuchshilfe gewählt. Dies kann in vorteilhafter Weise durch wählen der Drehgeschwindigkeit der Einführhilfen abhängig von der Durchlaufgeschwindigkeit der Wuchshilfe erfolgen, insbesondere, indem eine Umfangsgeschwindigkeit der Einführhilfen in etwa gleich der Durchlaufgeschwindigkeit der Wuchshilfe gewählt wird. Hierdurch werden somit die Pflanzen in der Geschwindigkeit mittels der Einführhilfen der Pflanzenführungseinheit zugeführt, in welcher auch die Wuchshilfe durch die Vorrichtung verläuft, d. h. in der Geschwindigkeit, mittels derer die Vorrichtung entlang der Wuchshilfe geführt wird. Hierdurch wird insbesondere eine Krafteinwirkung auf die Wuchshilfe, aufgrund einer unterschiedlichen Bewegungsgeschwindigkeit zwischen Pflanzenteile einerseits und Wuchshilfe andererseits vermieden.

Hierbei ist es insbesondere vorteilhaft, die Fahrgeschwindigkeit der Vorrichtung relativ zu der Wuchshilfe zu messen und abhängig von der Fahrgeschwindigkeit die Drehgeschwindigkeit der Einführhilfen zu steuern. Typischerweise wird die erfindungsgemäße Vorrichtung mittels eines Fahrzeugs entlang der Wuchshilfeführung geführt, insbesondere mittels eines Traktors. Es kann somit in vorteilhafter und einfacher Weise die Fahrgeschwindigkeit des Fahrzeugs ermittelt werden und abhängig von dieser Fahrgeschwindigkeit die Drehgeschwindigkeit der Einführhilfen gesteuert werden.

In einer vorzugsweisen Ausführungsform weist jede Einführhilfe zumindest ein drehbar gelagertes, im Wesentlichen zylindrisches Element auf, insbesondere zumindest eine Walze. Hierdurch kann in einfacher Weise jeweils eine motorisch angetriebene Einführhilfe ausgebildet werden, welche die zuvor genannten vorteilhaften Effekte aufweist.

In einer konstruktiv vorteilhaft einfachen Ausführungsform ist jede Einführhilfe jeweils als ein im Wesentlichen zylindrisches Element, insbesondere als eine Walze ausgebildet.

Hierbei ist es insbesondere vorteilhaft, dass jede Einführhilfe eine Querschnittsfläche in Form eines regelmäßigen n-Ecks, mit n im Bereich 3 bis 12, vorzugsweise im Bereich 5 bis 10, insbesondere im Bereich 6 bis 8 ausgebildet ist.

Hierdurch kann in einfacher Weise eine Einführhilfe ausgebildet werden, welche bei motorischem Antreiben um die Zylinderachse einen entsprechenden Fördereffekt wie zuvor beschrieben und gleichzeitig eine seitliche Begrenzung aufweist.

Zur Verbesserung der Förderfunktion der Einführhilfen ist es vorteilhaft, dass jede Einführhilfe kammartige, nach außen vorstehende Transporthilfen aufweist, insbesondere ist es vorteilhaft, dass eine nach außen vorstehende Zahnlänge der Transporthilfen wahlweise durch einen Benutzer veränderbar ist. Die kammartigen Transporthilfen treten in Wechselwirkung und teilweisem Eingriff mit den Pflanzenteilen und erhöhen somit die Förderwirkung. Durch die verstellbare Zahnlänge kann die "Aggressivität" der Förderwirkung, d. h. die Wechselwirkung zwischen Einführhilfe und Pflanzenteil durch den Benutzer variiert werden.

Alternativ oder zusätzlich ist es vorteilhaft, die Transporthilfen radial verschiebbar anzuordnen, so dass durch Verschieben der Transporthilfen der wirksame Durchmesser der jeweiligen Einführhilfe veränderbar ist. Auch hierdurch kann die "Aggressivität" der Förderwirkung, d. h. die Wechselwirkung zwischen Einführhilfe und Pflanzenteil durch den Benutzer variiert werden.

Die kammartigen Transporthilfen können hierbei radial nach außen abstehen. Insbesondere ist es jedoch vorteilhaft, dass die kammartigen Transporthilfen entgegen der Förderrichtung, d. h. gegen die Durchlaufrichtung der Wuchshilfe geneigt sind, hierdurch wird ein Lösen der Pflanzenteile von den Transporthilfen bei Weitergabe der Pflanzenteile an die Pflanzenführungseinheit begünstigt. Weiterhin verhindern die kammartigen Transporthilfen, dass der Draht in vertikaler Richtung nach oben verschoben wird, insbesondere bei Einzug größerer Mengen von Pflanzenteilen.

In einer weiteren vorteilhaften Ausführungsform weist jede Einführhilfe zumindest ein Förderband auf. Hierdurch kann jeweils durch ein Förderband in einfacher Weise eine effiziente Förderfunktion und seitliche Begrenzung realisiert werden.

Vorzugsweise ist jede Einführhilfe jeweils mittels eines motorischen Antriebs angetrieben, insbesondere mittels eines Hydromotors. Hierdurch ist eine konstruktiv einfache Lösung gegeben, insbesondere können handelsübliche Hydromotoren, welche an hydraulische Systeme eines Fahrzeugs zum Transport der Vorrichtung, insbesondere eines Traktors anschließbar sind, verwendet werden.

Es liegt im Rahmen der Erfindung, typische, dem Fachmann bekannte lineare Fördermittel als Einführhilfe zu verwenden, insbesondere eine oder mehrere Walzen oder Förderbänder, wie zuvor ausgeführt. Ebenso liegt die Verwendung von Rollenbahnen im Rahmen der Erfindung.

Es ist insbesondere vorteilhaft, die erfindungsgemäße Vorrichtung grundsätzlich nach der Vorrichtung gemäß WO 2009/051498 A2 bzw. einer vorzugsweisen Ausführungsform hiervon auszubilden. Auf diesen Stand der Technik wird vollumfänglich Bezug genommen und er wird ausdrücklich vollumfänglich per Referenz eingebunden. Die Weiterbildung der vorbekannten Vorrichtung besteht insbesondere in dem Anordnen der Einführhilfen vor der Pflanzenführungseinheit gemäß der erfindungsgemäßen Vorrichtung.

Die Pflanzenführungseinheit der erfindungsgemäßen Vorrichtung ist vorzugsweise zum Führen der Wuchshilfe ausgebildet, insbesondere das Einzugsrad ist vorzugsweise mit einem sich hinsichtlich der Drehachse axial von den Seiten des Einzugsrades jeweils zur Mitte hin verringernden Durchmesser ausgebildet, so dass eine mittige Führung der Wuchshilfe in axialer Richtung der Drehachse des Einzugsrades gewährleistet ist.

Als vorzugsweise Ausführungsform der erfindungsgemäßen Vorrichtung wird insbesondere auf die Figuren 1 bis 11 der WO 2009/051498 und der dazugehörigen Figurenbeschreibung Bezug genommen, wobei einer solchen vorzugsweisen Ausführungsform wie zuvor ausgeführt die Einführhilfen vor der Pflanzenführungseinheit hinzuzufügen ist. Als weitere vorzugsweise Ausführungsform der erfindungsgemäßen Vorrichtung wird insbesondere auf die Figuren 1 bis 9 der EP 2 486 787 B1 und der dazugehörigen Figurenbeschreibung Bezug genommen, wobei einer solchen vorzugsweisen Ausführungsform wie zuvor ausgeführt die Pflanzenausrichteinheit 12 der EP 2 486 787 B1 durch die Einführhilfen der vorliegenden erfindungsgemäßen Vorrichtung zu ersetzen ist.

Weitere Vorteile und Eigenschaften der vorliegenden Erfindung werden im Folgenden anhand von einem Ausführungsbeispiel und den Figuren erläutert. Dabei zeigt:
- Figur 1: ein erstes Ausführungsbeispiel einer erfindungsgemäßen Vorrichtung in isometrischer Ansicht;
- Figur 2: das erste Ausführungsbeispiel in Seitenansicht;
- Figur 3: das erste Ausführungsbeispiel in Draufsicht von oben;
- Figur 4: das erste Ausführungsbeispiel in Draufsicht von oben mit aufgeklapptem Oberteil;
- Figur 5: eine Schnittdarstellung des ersten Ausführungsbeispiels gemäß Figur 4;
- Figur 6: eine Draufsicht auf das erste Ausführungsbeispiel von vorne;
- Figur 7: ein Detail einer Einführhilfe des ersten Ausführungsbeispiels in isometrischer Ansicht;
- Figur 8: eine Seitenansicht (Teilbild a) und eine Schnittansicht (Teilbild b) des Teilelementes gemäß Figur 7;
- Figur 9: ein zweites Ausführungsbeispiel einer erfindungsgemäßen Vorrichtung in Draufsicht von oben;
- Figur 10: das zweite Ausführungsbeispiel in Seitenansicht und
- Figur 11: das zweite Ausführungsbeispiel in Draufsicht von vorne.

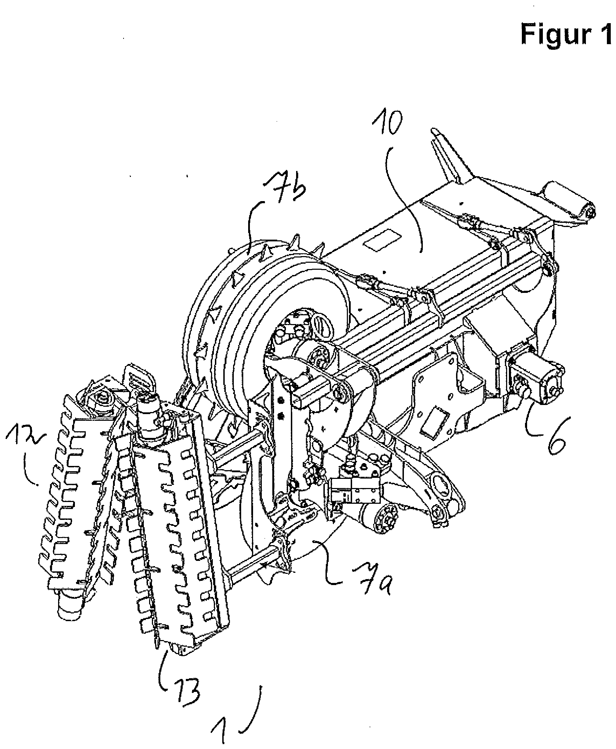

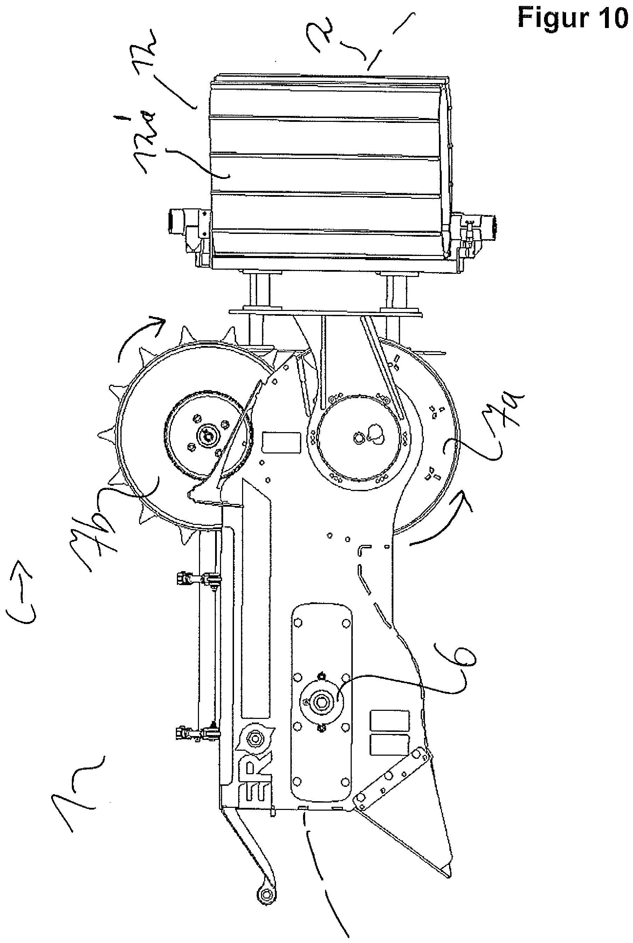

In den Figuren 1 bis 11 bezeichnen gleiche Bezugszeichen gleiche oder gleichwirkende Elemente.

In den Figuren 1 bis 6 ist als erstes Ausführungsbeispiel eine Vorrichtung 1 zum Entfernen von Pflanzenteilen von mindestens einer länglichen, zugstabilen, biegeschlaffen Wuchshilfe dargestellt.

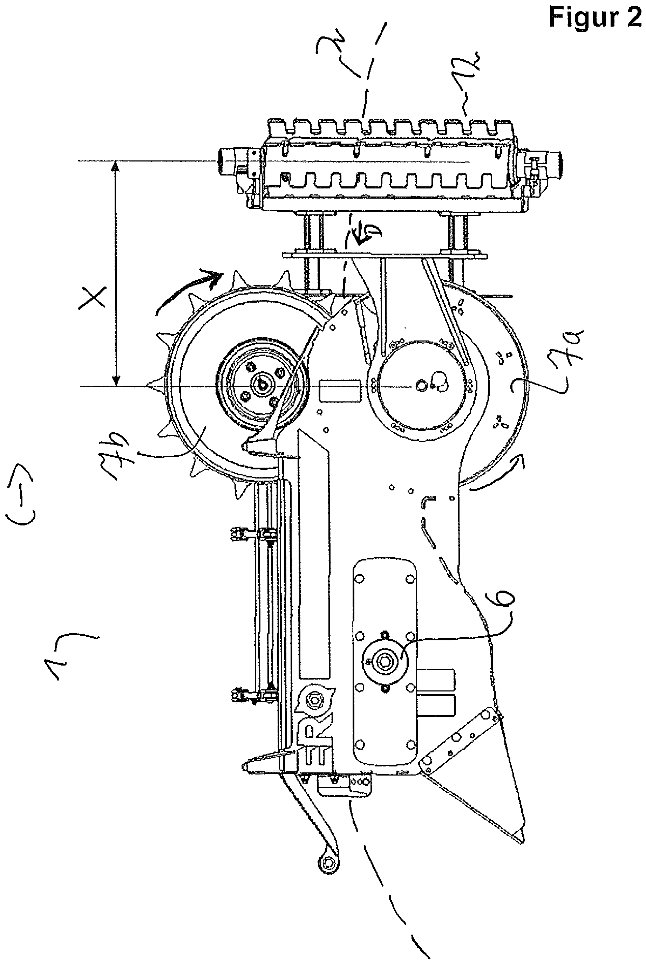

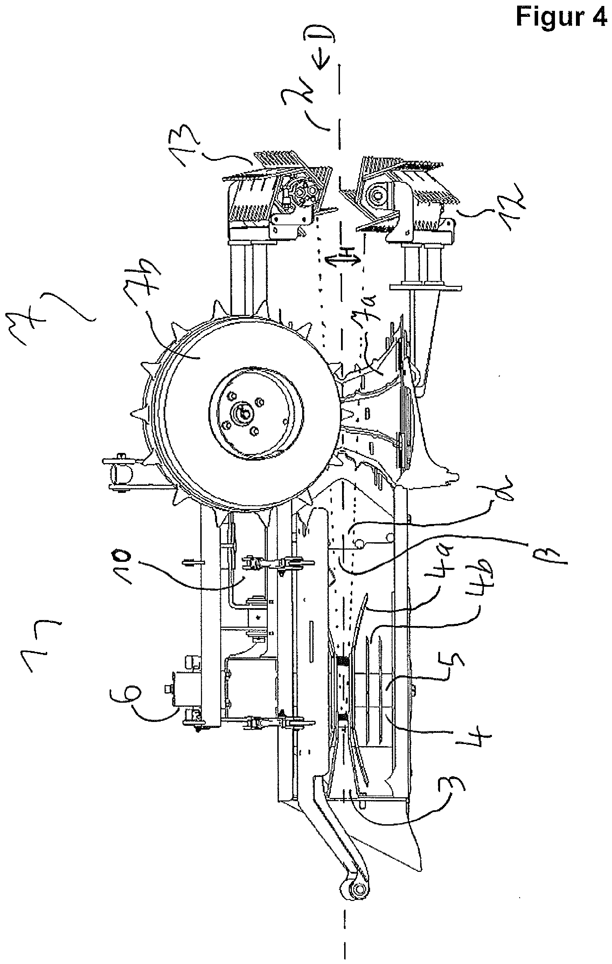

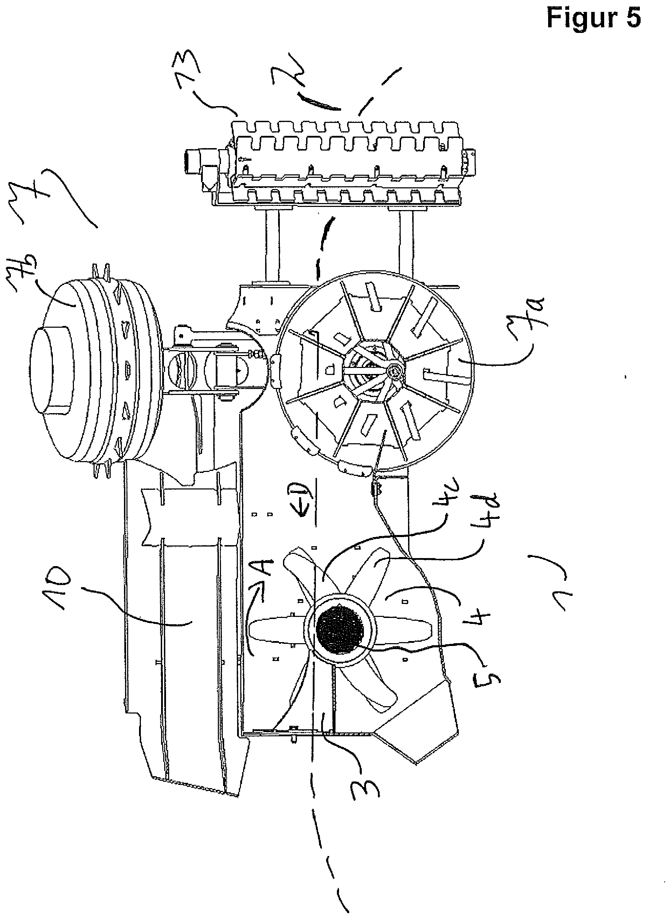

Die Vorrichtung ist zum Entfernen von Pflanzenteilen von beliebigen länglichen, zugstabilen, biegeschlaffen Wuchshilfen geeignet, wie beispielsweise von Seilen oder Drähten. Insbesondere ist die Vorrichtung 1 zum Einsatz im Weinbau geeignet, um Rebentrieben, welche von der Rebe abgeschnitten sind, jedoch noch als an Spalierdrähten ausgebildeten Wuchshilfen anhaften, zu entfernen. In den Figuren 2, 3, 4 und 5 ist zum besseren Verständnis jeweils eine Wuchshilfe 2 als gestrichelte Linie angedeutet. Die Figur 5 stellt hierbei eine seitliche Ansicht in einer Schnittdarstellung dar, wobei die Schnittebene in etwa entlang der Wuchshilfe 2 gemäß Figur 4 verläuft und senkrecht zur Zeichenebene in der Darstellung gemäß Figur 4 liegt.

Die Vorrichtung 1 umfasst eine Wuchshilfeführung 3, welche als nach oben offener Führungskanal mit einem in etwa U-förmigen Querschnitt senkrecht zur Längsachse einer in der Wuchshilfeführung 3 liegenden Wuchshilfe 2 ausgebildet ist. Mittels der Wuchshilfeführung 3 wird die Wuchshilfe 2 insbesondere im Bereich einer Ablöseeinheit 4 der Vorrichtung 1 geführt. Dies ist insbesondere in den Figuren 4 und 5 ersichtlich.

Die Ablöseeinheit 4 umfasst eine Vielzahl von Ablöseelementen, von denen in Figur 4 exemplarisch zwei Ablöseelemente 4a und 4b sowie in Figur 5 zwei diesem gegenüberliegenden Ablöseelemente 4c und 4d gekennzeichnet sind. Die Ablöseelemente sind jeweils als Schneidmesser ausgebildet, welche an einer gemeinsamen Welle 5 angebracht sind und mittels eines Ablöseeinheitmotors 6 in Rotation gemäß Pfeil A in Figur 5 versetzt werden können.

Die Vorrichtung 1 umfasst weiterhin eine Pflanzenführungseinheit 7, welche ein unteres Einzugsrad 7a und ein oberes Einzugsrad 7b umfasst.

Die Einzugsräder 7a und 7b werden mittels eines zweiten Motors 8 gegensinnig angetrieben. Die Drehrichtung ist derart gewählt, dass die der Wuchshilfe 2 zugewandte Seite der Einzugsräder 7a und 7b sich jeweils in Durchlaufrichtung der Wuchshilfe (Pfeil D in den Figuren 4 und 5) bewegt. Die Rotationsrichtung ist zusätzlich in Figur 2 durch Pfeile angedeutet.

Zur Verwendung der Vorrichtung 1 wird diese mittels einer seitlich angeordneten Halterung 9 an einer (nicht dargestellten) Haltevorrichtung angebracht, welche Haltevorrichtung wiederum an einem (nicht dargestellten) Traktor angebracht ist. Mittels der Haltevorrichtung kann die Vorrichtung 1 bezüglich der Höhe variiert werden sowie bezüglich der seitlichen Ausrichtung in Fahrtrichtung rechts vor dem Traktor.

Zur Verwendung der Vorrichtung in einem Weinberg mit Kordonerziehung müssen entweder die betreffenden Spalierdrähte per Hand von den Haltemasten entlang einer Weinrebenzeile entfernt werden oder mittels entsprechender Haltevorrichtungen, wie beispielsweise nach oben offenen Klemmhaken, an den Haltemasten angebracht sein, so dass sie nach oben abgezogen werden können. An dem ersten und letzten Mast einer Weinrebenzeile sind die Spalierdrähte unlösbar angebracht.

Zu Beginn wird die Vorrichtung in eine Position nahe des ersten Pfosten gebracht und das obere Einzugsrad 7b sowie eine obere Abdeckung 10 werden durch Verschwenken weggeklappt, so dass sich der Zustand gemäß der Figuren 4 und 5 ergibt. Anschließend wird der Spalierdraht 2 oder gegebenenfalls mehrere Spalierdrähte von oben auf das untere Einzugsrad 7a gelegt und in die Wuchshilfeführung 3 von oben eingeführt. Anschließend werden obere Abdeckung 10 und oberes Einzugsrad 7b wieder in die ursprüngliche Position, wie in den Figuren 1, 2, 3 und 6 dargestellt, gebracht.

Die Wuchshilfen 2 verlaufen somit zwischen oberem Einzugsrad 7b und unterem Einzugsrad 7a (siehe Figur 2) und durch die Wuchshilfeführung 3 hindurch und somit ebenfalls zwischen den Ablöseelementen der Ablöseeinheit 4 hindurch (siehe Figuren 4 und 5).

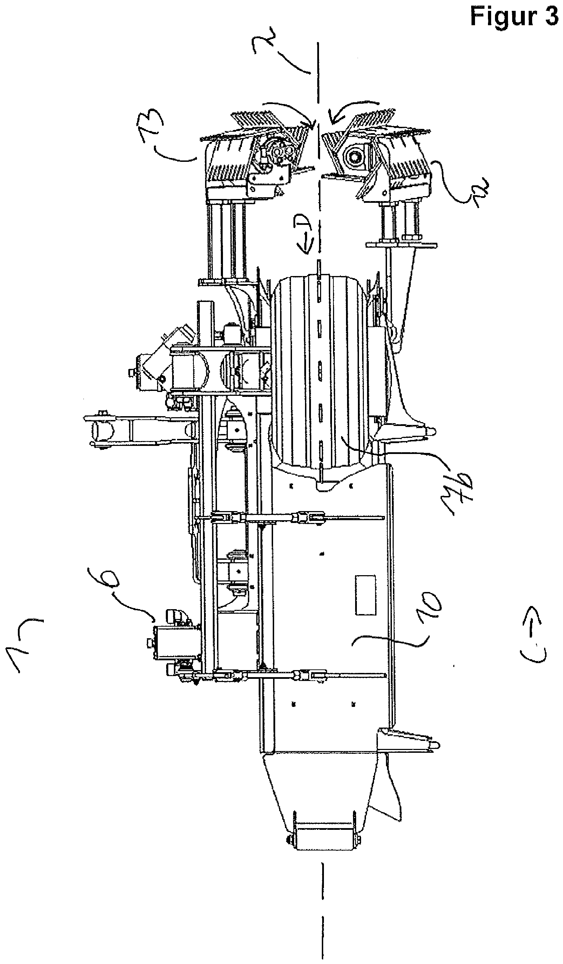

Anschließend wird mittels des Traktors die Vorrichtung 1 oberhalb der Maste der Weinrebenzeile entlanggefahren, so dass die Spalierdrähte 2 nach oben aus den Halterungen der Maste herausgezogen werden, sofern sie nicht bereits vorher aus entsprechenden Halterungen entfernt wurden. Der Traktor fährt nun entlang der Weinrebenzeile, so dass die Wuchshilfen 2 während dieser Bewegung durch die Vorrichtung 1 hindurchgeleitet werden. In den Figuren 2 und 3 ist die Bewegungsrichtung der Vorrichtung durch einen Pfeil C gekennzeichnet und die Relativbewegung der Wuchshilfen 2 zu der Vorrichtung 1 durch einen Pfeil D, welche Relativbewegung entsprechend entgegengesetzt zu der Bewegungsrichtung C der Vorrichtung 1 verläuft.

An den Spalierdrähten anhaftende Pflanzenteile, insbesondere Rebentriebe werden somit zwischen den Einzugsrädern 7a und 7b hindurchgeführt und hierbei gegebenenfalls durch Zusammendrücken komprimiert und zu der Ablöseeinheit 4 (zusammen mit der sich relativ zu der Vorrichtung 1 hindurchbewegenden Wuchshilfe 2) zugeführt.

Die als Schneidmesser ausgebildeten, rotierenden Ablöseelemente 4a, 4b lösen die Pflanzenteile von den Wuchshilfen 2 ab, durch Häckseln, Abschlagen und/oder Zerstückeln.

Hinsichtlich dieses Grundaufbaus kann die Vorrichtung somit in EP 2 486 787 B1 aufgebaut sein. Insbesondere das untere Einzugsrad 7a kann als "Fingerrad" ausgebildet sein, wie in EP 2 486 787 B1 beschrieben.

Wesentlich ist, dass die Vorrichtung gemäß der vorliegenden Erfindung zumindest zwei motorisch angetriebene Einführhilfen aufweist.

Diese Einführhilfen 12, 13 sind bei dem ersten Ausführungsbeispiel als motorisch angetriebene Walzen ausgebildet.

Wie in den Figuren 1 bis 6 ersichtlich, sind die Einführhilfen 12, 13 in Durchlaufrichtung D der Wuchshilfe 2 vor der Pflanzenführungseinheit 7 angeordnet.

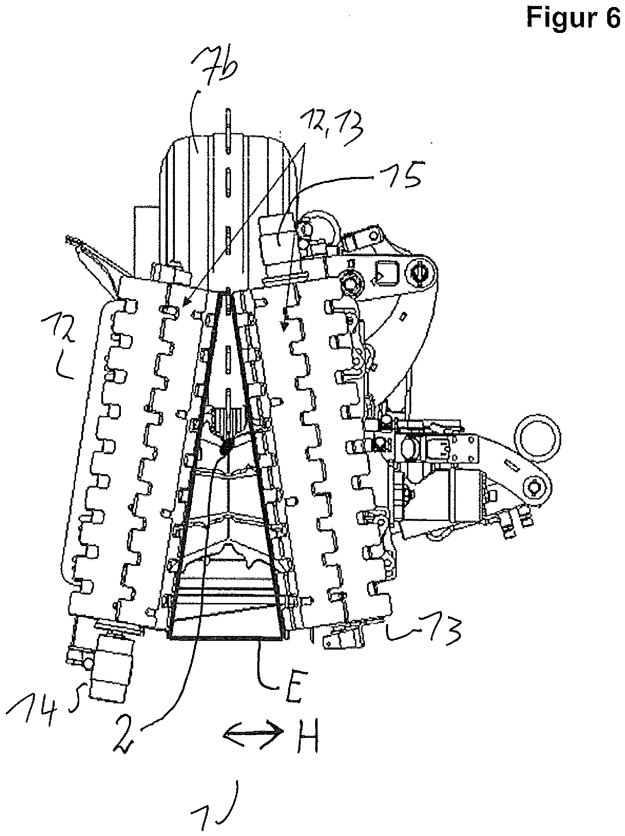

Wie insbesondere in Figur 6 ersichtlich, sind die Einführhilfen 12, 13 derart angeordnet und mit der Pflanzenführungseinheit 3 zusammenwirkend ausgebildet, dass bei Benutzung der Vorrichtung 1 die Wuchshilfe 2 zwischen den beiden Einführhilfen 12, 13 hindurch läuft, so dass die Einführhilfen 12, 13 einen Einführbereich von Wuchshilfe und Pflanzen in die Pflanzenführungseinheit 7 zumindest horizontal nach rechts und links begrenzen.

Der Einführbereich ist in Figur 6 als dick umrandetes Dreieck E dargestellt. Er wird horizontal (siehe Markierung H in Figur 6) nach rechts und links durch die Einführhilfen 12 und 13 begrenzt.

Die Einführhilfen 12 und 13 sind mittels zweier Einführhilfenmotoren 14 und 15, welche als Hydromotoren ausgebildet sind, angetrieben. Bei Benutzung drehen sich die Einführhilfen 12, 13 gegenläufig, wie in Figur 3 durch entsprechende Pfeile angedeutet. Analog zu den Drehrichtungen von unterem Einzugsrad 7a und oberem Einzugsrad 7b ist auch die Drehrichtung der Einführhilfen 12 und 13 derart gewählt, dass die der Wuchshilfe 2 zugewandten Seiten der Einführhilfen 12 und 13 sich jeweils in Durchlaufrichtung D der Wuchshilfe 2 drehen.

Die Vorrichtung 1 weist weiterhin eine nicht dargestellte Steuereinheit auf. Diese ist mit einem Geschwindigkeitsmesssystem eines die Vorrichtung 1 tragenden Faktors verbunden und steuert die Drehgeschwindigkeit der Einführhilfen 12, 13 und bevorzugt auch der Einzugsräder 7a und 7b derart, dass die Umfangsgeschwindigkeit der Fahrgeschwindigkeit des Traktors entspricht. Die jeweils der Wuchshilfe 2 zugewandte Seite der Einführhilfen 12, 13 und der Einzugsräder 7a, 7b weist somit in etwa die gleiche Geschwindigkeit auf, mit welcher die Wuchshilfe 2 durch die Vorrichtung 1 hindurchläuft, so dass keine zusätzlichen Kräfte aufgrund einer Relativbewegung zwischen Umfang der Einführhilfen 12, 13 und Einzugsräder 7a, 7b und Wuchshilfe 2 auf die Wuchshilfe einwirken.

Wie in den Figuren 4 und 6 ersichtlich, ist durch Wuchshilfeführung 3, Einzugsräder 7a und 7b sowie die Einführhilfen 12 und 13 ein Begrenzungsraum für in etwa geradlinige (bei Draufsicht von oben gemäß Figur 4) Verläufe der Wuchshilfe 2 ausgebildet. Dieser Begrenzungsraum ist in Figur 4 durch gepunktete Linien angedeutet.

In horizontaler Richtung H wird der Begrenzungsraum somit in etwa durch die Wuchshilfeführung 3 als Spitze eines Dreiecks sowie die Einführhilfen 12 und 13 begrenzt. Nach oben und unten wird der Begrenzungsraum durch die Einzugsräder 7a und 7b begrenzt sowie dadurch, dass aufgrund der Schwerkraft und der Spannung der Wuchshilfe 2 diese nach unten gezogen wird.

Der Begrenzungsraum weist somit eine Querschnittsfläche senkrecht zu der Wuchshilfe 2 auf, die im Einzugsbereich zwischen den Einführhilfen 12 und 13 die größte Fläche aufweist und hiervon ausgehend bis zu der Wuchshilfeführung 3 abnimmt.

Wie in Figur 4 ersichtlich erfolgt die Zusammenwirkung derart, dass der Begrenzungsraum nicht mit dem Wirkungsbereich der Ablöseelemente (insbesondere des Ablöseelementes 4a) der Ablöseeinheit 4 überlappt. Die rotierenden Ablöseelemente greifen somit nicht in den Begrenzungsraum ein, so dass eine Beschädigung der Wuchshilfe 2 durch die Ablöseelemente 4a, 4b, 4c, 4d vermieden wird.

Der Öffnungswinkel α zwischen einer Seite des Begrenzungsraums und der Wuchshilfe 2 beträgt etwa 5° (die Figuren sind nicht maßstabsgetreu). Insbesondere können die Einführhilfen 12 und 13 derart angeordnet sein, dass der Winkel α, welcher maßgeblich durch die Position der Einführhilfe 12 zu der Wuchshilfe 3 bestimmt wird, unterschiedlich zu einem Öffnungswinkel β, welcher maßgeblich durch die Einführhilfe 13 und die Wuchshilfe 3 bestimmt ist. Vorzugsweise liegt die Summe von α und β im Bereich 5° bis 80°, insbesondere im Bereich 10° bis 60°. Insbesondere bevorzugt sind die beiden Winkel α und β gleich.

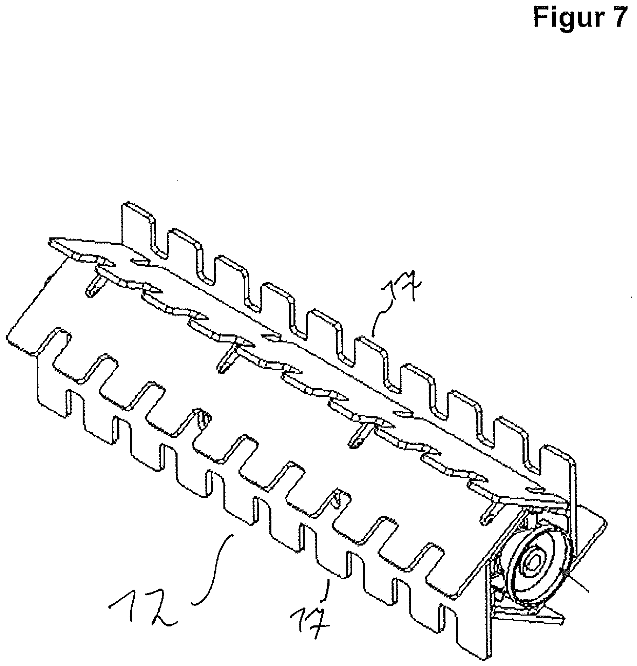

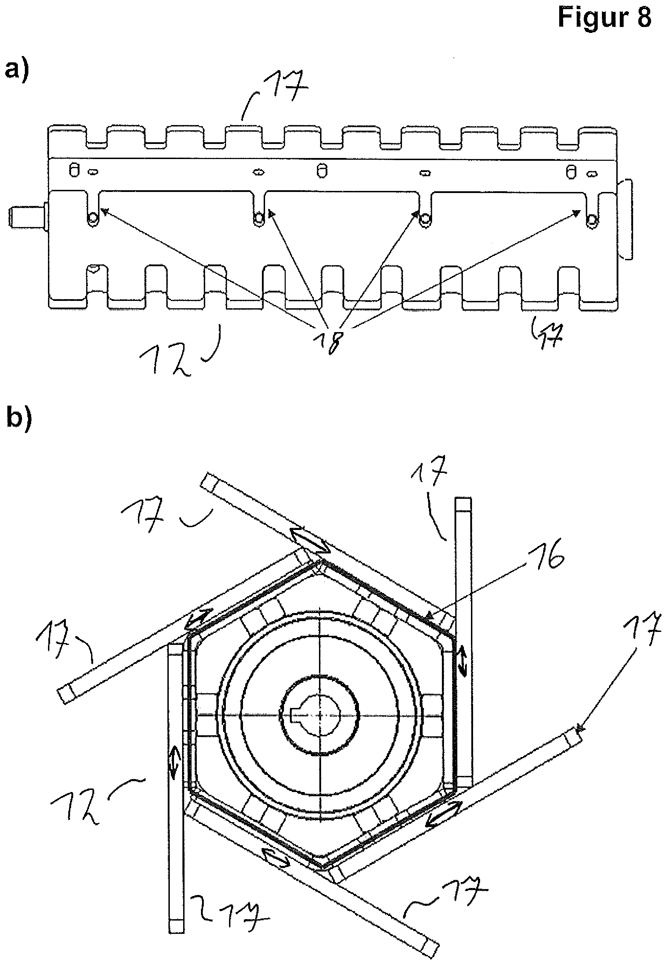

In den Figuren 7, 8a und 8b ist jeweils die Einführhilfe 12 (ohne Motor 14) dargestellt.

Wie insbesondere in Figur 8b ersichtlich, weist die Einführhilfe 12 einen zylindrischen Aufbau auf, mit einem regelmäßigen Sechs-Eck (16) als Querschnittsfläche. An diesem zylindrischen Grundaufbau sind kammartige, nach außen vorstehende Transporthilfen 17 angeordnet. Die Transporthilfen 17 sind aus einem flexiblen Material, beispielsweise faserverstärkter Gummi ausgebildet und weisen Langlöcher 18 auf. Mittels (nicht dargestellter) Schrauben lassen sich bei Lösen der Schrauben die Transporthilfen 17 jeweils parallel zu der dieser Transporthilfe zugeordneten Fläche des Sechsecks bewegen. In Figur 8b sind beispielhaft Bewegungsrichtungen durch Pfeile in den Transporthilfen 17 angedeutet.

Nach Verschieben der Transporthilfen 17 können durch Anziehen der Schrauben die Transporthilfen wiederum fest an dem zylindrischen Grundaufbau fixiert werden.

Durch das Verschieben der Transporthilfen durch den Benutzer kann der Radius des Umkreises der Einführhilfe verändert werden und somit der wirksame Durchmesser, mit welchem die die Einführhilfen auf die Pflanzenteile einwirken. Hiermit kann somit die "Aggressivität", mit welcher die Transporthilfen an den Pflanzenteilen, welche an der Wuchshilfe 2 anhaften, angreifen, variiert werden.

Die Einführhilfen 12, 13 sind mittels metallischer Stangen mit dem Grundgehäuse der Vorrichtung 1 verbunden. An den jeweiligen Verbindungsstellen sind Langlöcher vorgesehen, so dass durch Lösen von Befestigungsschrauben eine Justierung insbesondere des Winkels von Einführhilfe 12 und Einführhilfe 13 zu dem Grundgehäuse der Vorrichtung 1 möglich ist.

Der Abstand X gemäß Figur 2 zwischen den Drehachsen der Einführhilfen 12, 13 und der Drehachse des Einzugsrads 7a kann im Bereich 30 bis 80 cm liegen. Vorliegend beträgt der Abstand etwa 40 cm.

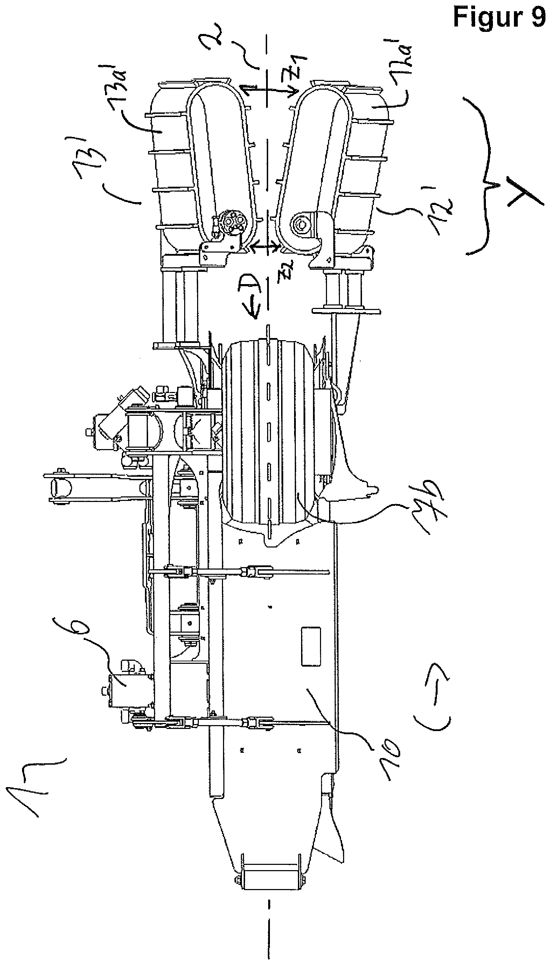

In den Figuren 9 bis 11 ist ein zweites Ausführungsbeispiel einer erfindungsgemäßen Vorrichtung dargestellt. Der Grundaufbau gleicht dem Grundaufbau des ersten Ausführungsbeispiels, insbesondere ist Figur 9 grundsätzlich mit Figur 3, Figur 10 und Figur 2 und Figur 11 mit Figur 6 vergleichbar. Gleiche Bezugszeichen bezeichnen gleiche oder gleichwirkende Elemente. Zur Vermeidung von Wiederholungen wird nachfolgend daher lediglich auf die wesentlichen Unterschiede eingegangen:
Das zweite Ausführungsbeispiel einer erfindungsgemäßen Vorrichtung weist Einführhilfen 12' und 13' auf. Diese Einführhilfen umfassen jeweils ein Förderband 12a' und 13a'.

Die Förderbänder werden von Hydromotoren 14 und 15 gegensinnig angetrieben. Entsprechende Rollen zur Lagerung der Förderbänder sind in den Figuren 9 bis 11 aus Gründen der besseren Übersichtlichkeit nicht dargestellt.

Die Funktionsweise des zweiten Ausführungsbeispiels ist analog zu der zuvor beschriebenen Funktionsweise des ersten Ausführungsbeispiels. Das zweite Ausführungsbeispiel weist jedoch den Vorteil auf, dass verglichen mit den als Walzen ausgebildeten Einführhilfen 12 und 13 über eine größere Strecke eine Interaktion zwischen Pflanzenteilen und Einführhilfen erfolgt: Wie in Figur 9 ersichtlich, kann über eine Förderstrecke Y eine Einwirkung zwischen den Förderbändern 12a' und 13a' und den an der Wuchshilfe 2 anhaftenden Pflanzenteilen erfolgen.

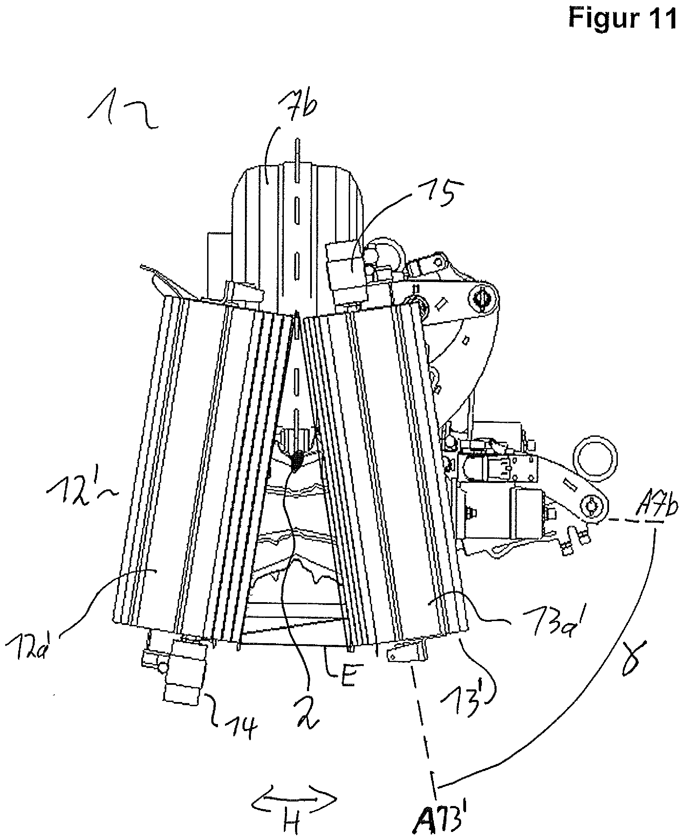

Wie in Figur 11 ersichtlich, sind bei Draufsicht von vorne die Einführhilfen 12' und 13' analog zu den Einführhilfen 12 und 13 zueinander geneigt angeordnet und bilden somit zusammen mit einer (nicht dargestellten) Wuchshilfeführung 3 einen Begrenzungsraum wie bei dem ersten Ausführungsbeispiel beschrieben.

Darüber hinaus sind in diesem zweiten Ausführungsbeispiel die Einführhilfen 12' und 13' jedoch auch in Draufsicht von oben gemäß Figur 9 in Durchlaufrichtung D zulaufend angeordnet, so dass ein Abstand Z1 an einem vorderen Ende der Einführhilfen 12' und 13' größer ist als ein Abstand Z2 an einem hinteren Ende der Einführhilfen 12' und 13'. Hierdurch wird somit eine Vorkomprimierung der Pflanzenteile erwirkt, bevor die Pflanzenteile der Pflanzenführungseinheit 7 mit den Einzugsrädern 7a und 7b für eine weitere Komprimierung zugeführt werden. Insbesondere erfolgt die erste Komprimierung in etwa senkrecht zu der zweiten Komprimierung, da die Drehachsen der Rollen der Förderbänder 12a' und 13a' in etwa senkrecht zu den Drehachsen der Einzugsräder 7a und 7b stehen, d. h. zu diesem zumindest einen Winkel im Bereich 45 bis 90°, vorzugsweise 50° bis 80° aufweisen. Beispielhaft ist in Figur 11 ein solcher Winkel γ zwischen einer Drehachse A 7b des unteren Einzugsrads 7b und einer Drehachse A 13' einer Rolle der Einführhilfe 13' eingezeichnet.

## Patentansprüche

1. Vorrichtung (1) zum Entfernen von Pflanzenteilen von mindestens einer länglichen, zugstabilen, biegeschlaffen Wuchshilfe (2) während einer Bewegung der Vorrichtung (1) entlang der Wuchshilfe (2), wobei die Wuchshilfe (2) die Vorrichtung durchläuft, insbesondere zum Entfernen von Rebentrieben von mindestens einem Spalierdraht,
umfassend
- eine Wuchshilfeführung (3), zum Führen der Wuchshilfe (2) während der Bewegung der Vorrichtung (1) entlang der Wuchshilfe (2),
- eine Ablöseeinheit (4) und
- eine Pflanzenführungseinheit (7) zum Komprimieren und/oder Zuführen der an der Wuchshilfe (2) anhaftenden Pflanzenteile zu der Ablöseeinheit,
welche Ablöseeinheit (4) mindestens ein Ablöseelement umfasst, welches Ablöseelement derart beweglich an der Vorrichtung (1) angeordnet ist, dass bei Betrieb durch Bewegung des Ablöseelementes (4a, 4b) Pflanzenteile von der Wuchshilfe (2) zumindest teilweise ablösbar sind, wobei in Durchlaufrichtung der Wuchshilfe (2) die Pflanzenführungseinheit (7) vor der Ablöseeinheit (4) und vor der Wuchshilfeführung (3) angeordnet ist, und wobei die Wuchshilfe (2) durch die Pflanzenführungseinheit (7), die Ablöseeinheit (4) und die Wuchshilfeführung (3) hindurchläuft,
**dadurch gekennzeichnet,**
**dass** die Pflanzenführungseinheit (7) ein unteres Einzugsrad (7a) und ein oberes Einzugsrad (7b) umfasst,
**dass** die Vorrichtung (1) zumindest zwei motorisch angetriebene Einführhilfen (12, 13, 12', 13') aufweist, die in Durchlaufrichtung der Wuchshilfe (2) vor der Pflanzenführungseinheit (7) angeordnet sind und
die Einführhilfen (12, 13, 12', 13') derart angeordnet und mit der Pflanzenführungseinheit (7) zusammenwirkend ausgebildet sind, dass bei Benutzung der Vorrichtung (1) die Wuchshilfe (2) zwischen den beiden Einführhilfen und durch die Pflanzenführungseinheit (7), die Ablöseeinheit (4) und die Wuchshilfeführung (3) hindurchläuft, so dass in der Zusammenwirkung von Einführhilfen (12, 13, 12', 13'), Pflanzenführungseinheit (7) und Wuchshilfeführung (3) für in etwa geradlinige Verläufe der Wuchshilfe (2) ein Begrenzungsraum für die Wuchshilfe (2) und die Pflanzen ausgebildet ist, welcher Begrenzungsraum nicht mit dem Wirkungsbereich des Ablöseelementes (4a, 4b) der Ablöseeinheit (4) überlappt, wobei die Einführhilfen (12, 13, 12', 13') den Einführbereich von Wuchshilfe (2) und Pflanzen in die Pflanzenführungseinheit (7) zumindest horizontal nach rechts und links begrenzen und der Begrenzungsraum nach oben und unten durch die Einzugsräder (7a, 7b) begrenzt wird.

2. Vorrichtung (1) nach Anspruch 1,
**dadurch gekennzeichnet,**
**dass** Einführhilfen (12, 13, 12', 13') und die Wuchshilfeführung (3) derart angeordnet und zusammenwirkend ausgebildet sind, dass durch die Einführhilfen und Wuchshilfeführung (3) ein Begrenzungsraum für in etwa geradlinige Verläufe der Wuchshilfe (2) ausgebildet ist, welcher Begrenzungsraum nicht mit dem Wirkungsbereich des Ablöseelementes (4a, 4b) der Ablöseeinheit (4) überlappt.

3. Vorrichtung (1) nach einem der vorangegangenen Ansprüche,
**dadurch gekennzeichnet,**
**dass** die Pflanzenführungseinheit (7) zumindest eine motorisch angetriebene Zuführwalze aufweist und dass Einführhilfen (12, 13, 12', 13') und die Wuchshilfeführung (3) derart angeordnet und zusammenwirkend ausgebildet sind, dass durch Einführhilfen und Wuchshilfeführung (3) ein Begrenzungsraum für in etwa geradlinige Verläufe der Wuchshilfe (2) ausgebildet ist, der nicht mit den seitlichen Rändern der Zuführwalze überlappt, insbesondere, dass die Einführhilfen derart ausgebildet und angeordnet sind, einen Einzugsbereich der Einführhilfe zumindest in Richtung der Drehachse der Zuführwalze seitlich zu begrenzen.

4. Vorrichtung (1) nach einem der Ansprüche 2 bis 3,
**dadurch gekennzeichnet,**
**dass** der Begrenzungsraum ausgehend von der Wuchshilfeführung (3) einen horizontalen Öffnungswinkel im Bereich 5° bis 80°, vorzugsweise im Bereich 10° bis 60° aufweist.

5. Vorrichtung (1) nach einem der vorangegangenen Ansprüche,
**dadurch gekennzeichnet,**
**dass** die Einführhilfen (12, 13, 12', 13') in Draufsicht von vorne auf die Vorrichtung einen Winkel im Bereich 5° bis 45°, insbesondere im Bereich 10° bis 40° einschließen..

6. Vorrichtung (1) nach einem der vorangegangenen Ansprüche,
**dadurch gekennzeichnet,**
**dass** die Einführhilfen (12,13) als im Wesentlichen zylindrische Elemente, insbesondere als Walzen ausgebildet sind.

7. Vorrichtung (1) nach Anspruch 6,
**dadurch gekennzeichnet,**
**dass** die Einführhilfen (12,13) als im Wesentlichen zylindrische Elemente mit Querschnittsflächen in Form eines regelmäßigem n-Ecks, mit n im Bereich 3 bis 12, vorzugsweise im Bereich 5 bis 10, insbesondere im Bereich 6 bis 8 ausgebildet sind.

8. Vorrichtung (1) nach einem der vorangegangenen Ansprüche,
**dadurch gekennzeichnet,**
**dass** jede Einführhilfe (12,13) kammartige, nach außen vorstehende Transporthilfen (17) aufweist, insbesondere, dass eine nach außen vorstehende Zahnlänge der Transporthilfen und/oder der wirksame Durchmesser der Einführhilfen wahlweise durch einen Benutzer veränderbar ist.

9. Vorrichtung (1) nach einem der vorangegangenen Ansprüche,
**dadurch gekennzeichnet,**
**dass** jede Einführhilfe (12',13') zumindest ein Förderband (12a', 13a') umfasst.

10. Vorrichtung nach einem der vorangegangenen Ansprüche,
**dadurch gekennzeichnet,**
**dass** jede Einführhilfe (12, 13, 12', 13') jeweils mittels einen motorischen Antriebs angetrieben wird, insbesondere mittels eines Hydromotors.

11. Verfahren zum Entfernen von Pflanzenteilen von mindestens einer länglichen, zugstabilen, biegeschlaffen Wuchshilfe (2) mittels einer Vorrichtung (1) während einer Bewegung der Vorrichtung (1) entlang der Wuchshilfe (2), insbesondere zum Entfernen von Rebentrieben von mindestens einem Spalierdraht,
folgende Verfahrensschritte umfassend:
- Komprimieren und/oder Zuführen von an der Wuchshilfe (2) anhaftenden Pflanzenteilen mittels einer Pflanzenführungseinheit (7) zu einer Ablöseeinheit, wobei vor dem Ablösen der Pflanzenteile in der Ablöseeinheit (4) der Einführbereich in die Ablöseeinheit (4) durch die Pflanzenführungseinheit (7) zumindest vertikal nach oben und unten begrenzt wird,
- durch Bewegen eines Ablöseelementes (4a, 4b, 4c, 4d) der Ablöseeinheit (4) zumindest teilweises Ablösen der Pflanzenteile von der Wuchshilfe (2) und
- Führen der Wuchshilfe durch die Vorrichtung mittels einer Wuchshilfeführung (3) während der Bewegung der Vorrichtung (1) entlang der Wuchshilfe (2),
**dadurch gekennzeichnet,**
**dass** vor dem Komprimieren und/oder Zuführen der Pflanzenteile mittels der Pflanzenführungseinheit (7) mittels zweier motorisch angetriebener Einführhilfen (12, 13, 12', 13'), zwischen denen die Wuchshilfe (2) hindurchläuft, dass durch die Einführhilfen (12, 13, 12), die Pflanzenführungseinheit (7) und die Wuchshilfeführung (3) für in etwa geradlinige Verläufe der Wuchshilfe (2) ein Begrenzungsraum für die Wuchshilfe (2) und die Pflanzen in einer Durchlaufrichtung der Wuchshilfe (2) durch die Vorrichtung (1) vor der Ablöseeinheit (4) ausgebildet wird, welcher Begrenzungsraum nicht mit dem Wirkungsbereich des Ablöseelementes (4a, 4b) der Ablöseeinheit (4) überlappt, wobei die Einführhilfen (12, 13, 12', 13') den Einführbereich von Wuchshilfe (2) und Pflanzen in die Pflanzenführungseinheit (7) zumindest horizontal nach rechts und links begrenzen und der Begrenzungsraum nach oben und unten durch die Einzugsräder (7a, 7b) begrenzt wird.

12. Verfahren nach Anspruch 11,
**dadurch gekennzeichnet,**
**dass** mittels der Einführhilfen (12, 13, 12', 13') und der Wuchshilfeführung (3) für in etwa geradlinige Verläufe der Wuchshilfe (2) ein Begrenzungsraum ausgebildet wird, welcher Begrenzungsraum nicht mit dem Wirkungsbereich des Ablöseelementes (4a, 4b) der Ablöseeinheit (4) überlappt.

13. Verfahren nach einem der Ansprüche 11 bis 12,
**dadurch gekennzeichnet,**
**dass** die Einführhilfen (12, 13, 12', 13') gegenläufig zueinander angetrieben werden, so dass die Einführhilfen sich an der der Wuchshilfe (2) zugewandten Seite jeweils in Durchlaufrichtung der Wuchshilfe (2) drehen.

14. Verfahren nach einem der Ansprüche 11 bis 13,
**dadurch gekennzeichnet,**
**dass** die Drehgeschwindigkeit der Einführhilfen (12, 13, 12', 13') abhängig von der Durchlaufgeschwindigkeit der Wuchshilfe (2) gewählt wird, insbesondere, dass die Umfangsgeschwindigkeit in etwa gleich der Durchlaufgeschwindigkeit der Wuchshilfe (2) gewählt wird.

15. Verfahren nach Anspruch 14,
**dadurch gekennzeichnet,**
**dass** die Fahrgeschwindigkeit der Vorrichtung relativ zu der Wuchshilfe (2) gemessen wird und Abhängig von der Fahrgeschwindigkeit die Drehgeschwindigkeit der Einführhilfen (12, 13, 12', 13') gesteuert wird.

## Claims

1. Device (1) for removing plant parts from at least one elongate, tensile-resistant, flexible growth support (2) during a movement of the device (1) along the growth support (2), the growth support (2) passing through the device, especially for removing vine shoots from at least one trellis wire,
comprising
- a growth support guide means (3), for guiding the growth support (2) during the movement of the device (1) along the growth support (2),
- a stripping unit (4) and
- a plant guide unit (7) for compressing and/or feeding the plant parts adhering to the growth support (2) to the stripping unit,
which stripping unit (4) comprises at least one stripping element, which stripping element is arranged on the device (1) so as to be movable in such a way that, during operation, plant parts are at least partly strippable from the growth support (2) by movement of the stripping element (4a, 4b),
wherein in the throughput direction of the growth support (2) the plant guide unit (7) is arranged before the stripping unit (4) and before the growth support guide means (3), and wherein the growth support (2) passes through the plant guide unit (7), the stripping unit (4) and the growth support guide means (3),
**characterised in that**
the plant guide unit (7) comprises a lower intake wheel (7a) and an upper intake wheel (7b),
the device (1) has at least two motor-driven introduction aids (12, 13, 12', 13') which are arranged before the plant guide unit (7) in the throughput direction of the growth support (2) and
the introduction aids (12, 13, 12', 13') are arranged and configured so as to co-operate with the plant guide unit (7) in such a way that, when the device (1) is in use, the growth support (2) passes between the two introduction aids and through the plant guide unit (7), the stripping unit (4) and the growth support guide means (3) so that, by co-operation of the introduction aids (12, 13, 12', 13'), the plant guide unit (7) and the growth support guide means (3), for approximately linear paths of the growth support (2) there is created a delimitation zone for the growth support (2) and the plants, which delimitation zone does not overlap the operating region of the stripping element (4a, 4b) of the stripping unit (4), wherein the introduction aids (12, 13, 12', 13') delimit the region of introduction of the growth support (2) and the plants into the plant guide unit (7) at least horizontally to right and left, and the delimitation zone is delimited towards top and bottom by the intake wheels (7a, 7b).

2. Device (1) according to claim 1,
**characterised in that**
introduction aids (12, 13, 12', 13') and the growth support guide means (3) are arranged and configured so as to co-operate in such a way that the introduction aids and the growth support guide means (3) create a delimitation zone for approximately linear paths of the growth support (2), which delimitation zone does not overlap the operating region of the stripping element (4a, 4b) of the stripping unit (4).

3. Device (1) according to either one of the preceding claims,
**characterised in that**
the plant guide unit (7) has at least one motor-driven feed roller, and introduction aids (12, 13, 12', 13') and the growth support guide means (3) are arranged and configured so as to co-operate in such a way that the introduction aids and the growth support guide means (3) create a delimitation zone for approximately linear paths of the growth support (2), which delimitation zone does not overlap the lateral edges of the feed roller; especially, the introduction aids are constructed and arranged in such a way that they laterally delimit an intake region of the introduction aid at least in the direction of the rotational axis of the feed roller.

4. Device (1) according to either one of claims 2 and 3,
**characterised in that**
the delimitation zone, starting from the growth support guide means (3), has a horizontal opening angle in the range of from 5° to 80°, preferably in the range of from 10° to 60°.

5. Device (1) according to any one of the preceding claims,
**characterised in that**
in a plan view onto the device from the front, the introduction aids (12, 13, 12', 13') enclose an angle in the range of from 5° to 45°, especially in the range of from 10° to 40°.

6. Device (1) according to any one of the preceding claims,
**characterised in that**
the introduction aids (12, 13) are in the form of substantially cylindrical elements, especially in the form of rollers.

7. Device (1) according to claim 6,
**characterised in that**
the introduction aids (12, 13) are in the form of substantially cylindrical elements having cross-sectional surfaces in the form of a regular n-sided figure, with n being in the range of from 3 to 12, preferably in the range of from 5 to 10, especially in the range of from 6 to 8.

8. Device (1) according to any one of the preceding claims,
**characterised in that**
each introduction aid (12, 13) has comb-like, outwardly projecting transport aids (17); especially, the length of an outwardly projecting tooth of the transport aids and/or the effective diameter of the introduction aids is/are adjustable as desired by a user.

9. Device (1) according to any one of the preceding claims,
**characterised in that**
each introduction aid (12', 13') comprises at least one conveyor belt (12a', 13a').

10. Device according to any one of the preceding claims,
**characterised in that**
each introduction aid (12, 13, 12', 13') is driven by means of a respective motor drive, especially by means of a hydraulic motor.

11. Method for removing plant parts from at least one elongate, tensile-resistant, flexible growth support (2) by means of a device (1) during a movement of the device (1) along the growth support (2), especially for removing vine shoots from at least one trellis wire, comprising the following steps:
- compression and/or feeding of plant parts adhering to the growth support (2) to a stripping unit by means of a plant guide unit (7), wherein before the stripping of the plant parts in the stripping unit (4) the region of introduction into the stripping unit (4) is delimited at least vertically towards top and bottom by the plant guide unit (7),
- by movement of a stripping element (4a, 4b, 4c, 4d) of the stripping unit (4), at least partial stripping of the plant parts from the growth support (2) and
- guidance of the growth support through the device by means of a growth support guide means (3) during the movement of the device (1) along the growth support (2),
**characterised in that**
before the compression and/or feeding of the plant parts by means of the plant guide unit (7), by means of two motor-driven introduction aids (12, 13, 12', 13'), between which the growth support (2) passes, there is created by the introduction aids (12, 13, 12), the plant guide unit (7) and the growth support guide means (3), for approximately linear paths of the growth support (2), a delimitation zone for the growth support (2) and the plants before the stripping unit (4) in a throughput direction of the growth support (2) through the device (1), which delimitation zone does not overlap the operating region of the stripping element (4a, 4b) of the stripping unit (4), wherein the introduction aids (12, 13, 12', 13') delimit the region of introduction of the growth support (2) and the plants into the plant guide unit (7) at least horizontally to right and left, and the delimitation zone is delimited towards top and bottom by the intake wheels (7a, 7b).

12. Method according to claim 11,
**characterised in that**
by means of the introduction aids (12, 13, 12', 13') and the growth support guide means (3), a delimitation zone for approximately linear paths of the growth support (2) is created, which delimitation zone does not overlap the operating region of the stripping element (4a, 4b) of the stripping unit (4).

13. Method according to either one of claims 11 and 12,
**characterised in that**
the introduction aids (12, 13, 12', 13') are driven in opposite directions to one another, so that the introduction aids each rotate in the throughput direction of the growth support (2) on the side facing towards the growth support (2).

14. Method according to any one of claims 11 to 13,
**characterised in that**
the rotational speed of the introduction aids (12, 13, 12', 13') is chosen in dependence upon the throughput speed of the growth support (2); especially, the circumferential speed is chosen to be approximately equal to the throughput speed of the growth support (2).

15. Method according to claim 14,
**characterised in that**
the travel speed of the device relative to the growth support (2) is measured and the rotational speed of the introduction aids (12, 13, 12', 13') is controlled in dependence upon the travel speed.

## Revendications

1. Dispositif (1) dévolu à la dissociation de parties végétales d'avec au moins un auxiliaire de croissance (2) de forme allongée, résistant à la traction et cédant à la flexion, au cours d'un mouvement dudit dispositif (1) le long dudit auxiliaire de croissance (2), lequel auxiliaire de croissance (2) défile à travers ledit dispositif, notamment en vue de dissocier des pousses de vigne d'avec au moins un fil de palissage,
comprenant
- un guide (3), affecté au guidage de l'auxiliaire de croissance (2) au cours du mouvement du dispositif (1) le long dudit auxiliaire de croissance (2),
- une unité de séparation (4) et
- une unité (7) de guidage de plantes qui est conçue pour comprimer et/ou pour délivrer, à ladite unité de séparation, les parties végétales adhérant audit auxiliaire de croissance (2),
laquelle unité de séparation (4) inclut au moins un élément séparateur, lequel élément séparateur est agencé avec mobilité, sur le dispositif (1), de façon telle que des parties végétales puissent être séparées au moins partiellement d'avec l'auxiliaire de croissance (2), en service, par mouvement imprimé audit élément séparateur (4a, 4b),
sachant que l'unité (7) de guidage des plantes est placée avant l'unité de séparation (4) et avant le guide (3) de l'auxiliaire de croissance, dans la direction de défilement dudit auxiliaire de croissance (2), et sachant que ledit auxiliaire de croissance (2) parcourt de part en part ladite unité (7) de guidage des plantes, ladite unité de séparation (4) et ledit guide (3) dudit auxiliaire de croissance,
**caractérisé par le fait**
**que** l'unité (7) de guidage des plantes comporte une roue inférieure d'insertion (7a) et une roue supérieure d'insertion (7b),
**que** le dispositif (1) est muni d'au moins deux auxiliaires d'introduction (12, 13, 12', 13') à entraînement motorisé, placés avant ladite unité (7) de guidage des plantes dans la direction de défilement de l'auxiliaire de croissance (2), et
lesdits auxiliaires d'introduction (12, 13, 12', 13') sont implantés, et réalisés pour coopérer avec ladite unité (7) de guidage des plantes de telle sorte que, lors d'une utilisation dudit dispositif (1), ledit auxiliaire de croissance (2) défile d'un trait entre les deux auxiliaires d'introduction et parcoure ladite unité (7) de guidage des plantes, l'unité de séparation (4) et le guide (3) dudit auxiliaire de croissance, donnant ainsi naissance à un espace de délimitation dédié à l'auxiliaire de croissance (2) et aux plantes, lors de la coopération desdits auxiliaires d'introduction (12, 13, 12', 13'), de ladite unité (7) de guidage des plantes et dudit guide (3) de l'auxiliaire de croissance ciblant des tracés sensiblement rectilignes dudit auxiliaire de croissance (2), lequel espace de délimitation ne chevauche pas la zone d'action de l'élément séparateur (4a, 4b) de ladite unité de séparation (4), sachant que lesdits auxiliaires d'introduction (12, 13, 12', 13') délimitent la zone d'introduction dudit auxiliaire de croissance (2) et des plantes dans ladite unité (7) de guidage desdites plantes, au moins horizontalement vers la droite et vers la gauche, et que l'espace de délimitation est démarqué vers le haut et vers le bas par les roues d'insertion (7a, 7b).

2. Dispositif (1) selon la revendication 1,
**caractérisé par le fait**
**que** les auxiliaires d'introduction (12, 13, 12', 13') et le guide (3) de l'auxiliaire de croissance sont implantés, et réalisés pour coopérer de telle sorte que lesdits auxiliaires d'introduction et ledit guide (3) dudit auxiliaire de croissance donnent naissance à un espace de délimitation ciblant des tracés sensiblement rectilignes dudit auxiliaire de croissance (2), lequel espace de délimitation ne chevauche pas la zone d'action de l'élément séparateur (4a, 4b) de l'unité de séparation (4).

3. Dispositif (1) selon l'une des revendications précédentes,
**caractérisé par le fait**
**que** l'unité (7) de guidage des plantes est pourvue d'au moins un cylindre d'amenée à entraînement motorisé ; et par le fait que les auxiliaires d'introduction (12, 13, 12', 13') et le guide (3) de l'auxiliaire de croissance sont implantés, et réalisés pour coopérer de telle sorte que lesdits auxiliaires d'introduction et ledit guide (3) dudit auxiliaire de croissance donnent naissance à un espace de délimitation qui cible des tracés sensiblement rectilignes dudit auxiliaire de croissance (2), et ne chevauche pas les bords latéraux dudit cylindre d'amenée ; notamment par le fait que lesdits auxiliaires d'introduction sont réalisés et implantés de manière à délimiter latéralement une zone d'insertion de l'auxiliaire d'introduction, au moins dans la direction de l'axe de rotation dudit cylindre d'amenée.

4. Dispositif (1) selon l'une des revendications 2 ou 3,
**caractérisé par le fait**
**que** l'espace de délimitation décrit, à partir du guide (3) de l'auxiliaire de croissance, un angle horizontal d'ouverture situé dans la plage de 5° à 80°, de préférence dans la plage de 10° à 60°.

5. Dispositif (1) selon l'une des revendications précédentes,
**caractérisé par le fait**
**que** les auxiliaires d'introduction (12, 13, 12', 13') décrivent un angle situé dans la plage de 5° à 45°, notamment dans la plage de 10° à 40° lorsque ledit dispositif est observé en plan par-devant.

6. Dispositif (1) selon l'une des revendications précédentes,
**caractérisé par le fait**
**que** les auxiliaires d'introduction (12, 13) sont réalisés sous la forme d'éléments substantiellement cylindriques, notamment en tant que rouleaux.

7. Dispositif (1) selon la revendication 6,
**caractérisé par le fait**
**que** les auxiliaires d'introduction (12, 13) sont réalisés sous la forme d'éléments substantiellement cylindriques présentant des aires de section transversale revêtant la forme d'un polygone régulier à n côtés, n étant situé dans la plage de 3 à 12, de préférence dans la plage de 5 à 10, en particulier dans la plage de 6 à 8.

8. Dispositif (1) selon l'une des revendications précédentes,
**caractérisé par le fait**
**que** chaque auxiliaire d'introduction (12, 13) est doté d'auxiliaires de transport (17) du type peigne, faisant saillie vers l'extérieur ; notamment par le fait qu'une longueur de dents desdits auxiliaires de transport, saillant vers l'extérieur, et/ou le diamètre opérant des auxiliaires d'introduction, peu(ven)t être sélectivement modifié(e)(s) par un utilisateur.

9. Dispositif (1) selon l'une des revendications précédentes,
**caractérisé par le fait**
**que** chaque auxiliaire d'introduction (12', 13') inclut au moins une bande convoyeuse (12a', 13a').

10. Dispositif (1) selon l'une des revendications précédentes,
**caractérisé par le fait**
**que** chaque auxiliaire d'introduction (12, 13, 12', 13') est respectivement entraîné au moyen d'un entraînement motorisé, en particulier au moyen d'un moteur hydraulique.

11. Procédé dévolu à la dissociation, au moyen d'un dispositif (1), de parties végétales d'avec au moins un auxiliaire de croissance (2) de forme allongée, résistant à la traction et cédant à la flexion, au cours d'un mouvement dudit dispositif (1) le long dudit auxiliaire de croissance (2), notamment en vue de dissocier des pousses de vigne d'avec au moins un fil de palissage,
comprenant les étapes opératoires suivantes :
- compression et/ou délivrance à une unité de séparation, au moyen d'une unité (7) de guidage de plantes, de parties végétales adhérant audit auxiliaire de croissance (2), sachant que, préalablement à la séparation desdites parties végétales dans ladite unité de séparation (4), la zone d'introduction dans ladite unité de séparation (4) est délimitée, au moins verticalement vers le haut et vers le bas, par ladite unité (7) de guidage des plantes,
- dissociation au moins partielle desdites parties végétales d'avec ledit auxiliaire de croissance (2), par mouvement imprimé à un élément séparateur (4a, 4b, 4c, 4d) de ladite unité de séparation (4), et
- guidage dudit auxiliaire de croissance à travers ledit dispositif, au moyen d'un guide (3) de l'auxiliaire de croissance (2), au cours du mouvement dudit dispositif (1) le long dudit auxiliaire de croissance (2),
**caractérisé par le fait**
**que**, préalablement à la compression et/ou à la délivrance des parties végétales au moyen de l'unité (7) de guidage des plantes, à l'aide de deux auxiliaires d'introduction (12, 13, 12', 13') à entraînement motorisé entre lesquels l'auxiliaire de croissance (2) défile d'un trait, un espace de délimitation, dédié audit auxiliaire de croissance (2) et auxdites plantes et ciblant des tracés sensiblement rectilignes dudit auxiliaire de croissance (2), est réservé avant l'unité de séparation (4), dans une direction de défilement dudit auxiliaire de croissance (2) à travers ledit dispositif (1), par lesdits auxiliaires d'introduction (12, 13, 12', 13'), ladite unité (7) de guidage des plantes et le guide (3) dudit auxiliaire de croissance, lequel espace de délimitation ne chevauche pas la zone d'action de l'élément séparateur (4a, 4b) de ladite unité de séparation (4), sachant que lesdits auxiliaires d'introduction (12, 13, 12', 13') délimitent la zone d'introduction dudit auxiliaire de croissance (2) et des plantes dans ladite unité (7) de guidage desdites plantes, au moins horizontalement vers la droite et vers la gauche, et que l'espace de délimitation est démarqué vers le haut et vers le bas par les roues d'insertion (7a, 7b).

12. Procédé selon la revendication 11,
**caractérisé par le fait**
**qu'**un espace de délimitation, ciblant des tracés sensiblement rectilignes de l'auxiliaire de croissance (2), est réservé au moyen des auxiliaires d'introduction (12, 13, 12', 13') et du guide (3) dudit auxiliaire de croissance, lequel espace de délimitation ne chevauche pas la zone d'action de l'élément séparateur (4a, 4b) de l'unité de séparation (4).

13. Procédé selon l'une des revendications 11 ou 12,
**caractérisé par le fait**
**que** les auxiliaires d'introduction (12, 13, 12', 13') sont entraînés dans des sens mutuellement opposés, de façon telle que lesdits auxiliaires d'introduction accomplissent respectivement une rotation dans la direction de défilement de l'auxiliaire de croissance (2), du côté tourné vers ledit auxiliaire de croissance (2).

14. Procédé selon l'une des revendications 11 à 13,
**caractérisé par le fait**
**que** la vitesse de rotation des auxiliaires d'introduction (12, 13, 12', 13') est choisie d'une manière dépendant de la vitesse de défilement de l'auxiliaire de croissance (2) ; notamment par le fait que la vitesse périphérique est choisie sensiblement égale à ladite vitesse de défilement dudit auxiliaire de croissance (2).

15. Procédé selon la revendication 14,
**caractérisé par le fait**
**que** la vitesse de déplacement du dispositif est mesurée par rapport à l'auxiliaire de croissance (2), et la vitesse de rotation des auxiliaires d'introduction (12, 13, 12', 13') est commandée d'une manière dépendant de ladite vitesse de déplacement.
